**Europäisches Patentamt**

**European Patent Office**

**Office européen des brevets**

(19)

(11) Veröffentlichungsnummer: **0 193 698**
**A1**

(12) ## EUROPÄISCHE PATENTANMELDUNG

(21) Anmeldenummer: **85890056.6**

(22) Anmeldetag: **05.03.85**

(51) Int. Cl.⁴: **B 23 Q 3/12**

(43) Veröffentlichungstag der Anmeldung: **10.09.86**
**Patentblatt 86/37**

(84) Benannte Vertragsstaaten: **DE FR GB IT**

(71) Anmelder: **GFM Gesellschaft für Fertigungstechnik und Maschinenbau Gesellschaft m.b.H., Ennserstrasse 14, A-4403 Steyr (AT)**

(72) Erfinder: **Marzy, Otto, Fichtenweg 6, A-4400 Steyr (AT)**
Erfinder: **Gaggl, Josef, Michael Sieberer Strasse 12, A-4400 Steyr (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(54) **Messerkopfbefestigung.**

(57) Eine Messerkopfbefestigung für scheibenförmige, stirnseitig an einem drehbaren Werkzeugträger (2) ansetzbare Messerköpfe (1) weist den Messerkopf (1) gegenüber dem Werkzeugträger (2) zentrierende radiale Paßflächen (5) sowie den zentrierten Messerkopf (1) an der Ansatzfläche (2a) des Werkzeugträgers (2) fixierende Spannelemente (7) auf.

Um ein einfaches, schnelles und aufwandsarm automatisierbares Messerkopfwechseln zu ermöglichen, ist der Messerkopf (1) mit Drehbewegungsspiel am Werkzeugträger (2) ansetzbar und die Spannelemente (7) bewirken beim Fixieren des Messerkopfes (1) axiale und tangentiale Spannkräfte oder Spannkraftkomponenten zum Andrücken des Messerkopfes (1) sowohl an die Ansatzfläche (2a) als auch an die Paßflächen (5).

0193698

## Messerkopfbefestigung

Die Erfindung betrifft eine Messerkopfbefestigung für scheibenförmige, stirnseitig an einem drehbaren Werkzeugträger ansetzbare Messerköpfe, mit den Messerkopf gegenüber dem Werkzeugträger zentrierenden radialen Paßflächen und den zentrierten Messerkopf an der Ansetzfläche des Werkzeugträgers fixierenden Spannelementen.

Innen- oder außenschneidende Fräsräder und ähnliche Messerköpfe sind stirnseitig an einem wellen- oder ring- bzw. trommelförmigen Werkzeugträger zu montieren und die Messerkopfbefestigung muß eine zentrierte, in axialer wie in Umfangsrichtung entsprechend belastbare Halterung des Messerkopfes am Werkzeugträger gewährleisten. Bisher werden die Messerköpfe am Werkzeugträger unter gleichzeitiger Zentrierung angesetzt und dann durch das Anziehen der Spannelemente axial gegen die Ansetzfläche des Werkzeugträgers verspannt, wobei als Spannelemente Spannschrauben oder mittels Schrauben beaufschlagbare Spannpratzen dienen und sich die radialen Paßflächen zur Zentrierung durch in radiale Zentriernuten eingreifende Zentrierkeile Federn od.dgl. ergeben. Da das Ansetzen des Messerkopfes somit bereits eine exakte Positionierung verlangt und sich außerdem die Messerköpfe, bedingt durch den Paßsitz der Zentrierkeile bzw. Federn in den Zentriernuten nur schwer vom Werkzeugträger abnehmen lassen, bringen die bekannten Messerkopfbefestigungen einen arbeitsintensiven, zeitraubenden Messerkopfwechsel mit sich, der außerdem zur Automatisierung komplizierte maschinelle Einrichtungen verlangt.

Der Erfindung liegt daher die Aufgabe zugrunde, diese Mängel zu beseitigen und eine Messerkopfbefestigung der eingangs geschilderten Art zu schaffen, die ein einfaches, schnelles und aufwandsarm automatisierbares Messerkopfwechseln erlaubt.

Die Erfindung löst diese Aufgabe dadurch, daß der Messerkopf mit Drehbewegungsspiel am Werkzeugträger ansetzbar ist und die Spannelemente beim Fixieren des Messerkopfes axiale und tangentiale Spannkräfte oder Spannkraftkomponenten zum Andrücken des Messerkopfes sowohl an die Ansetzfläche als auch an die Paßflächen des Werkzeugträgers bewirken. Der Messerkopf wird demnach nicht schon durch das Ansetzen am Werkzeugträger selbst zentriert, sondern erst durch den Angriff der Spannelemente und die damit verbundene Spannkraftbeaufschlagung. Dem Messerkopf läßt sich daher am Werkzeugträger ein loser Spielsitz zuordnen, der nicht nur das Ansetzen, sondern vor allem auch das Abnehmen des Messerkopfes ohne besonderen Kraftaufwand und mit einfachen Mitteln ermöglicht. Die Spannelemente müssen dafür beim Fixieren des Messerkopfes an der Ansetzfläche des Werkzeugträgers das beim Ansetzen vorhandene Spiel überwinden und daher durch eine entsprechende tangentiale Spannkraft oder Spannkraftkomponente den Messerkopf in Umfangsrichtung relativ zum Werkzeugträger verdrehen, bis die einander zugeordneten Paßflächen von Werkzeugträger und Messerkopf aneinanderliegen und der Messerkopf dem Werkzeugträger gegenüber zentriert ist. Zusätzlich zu dieser Tangentialverspannung müssen die Spannelemente den Messerkopf auch in axialer Richtung an die Ansetzfläche des Werkzeugträger drücken, um die auch axial belastbare Halterung des Messerkopfes am Werkzeugträger sicherzustellen. Sind diese Spannelemente durch übliche Schrauber anzuziehen bzw. zu lösen, kann der Messerkopf mit einer aufwandsarmen Wechseleinrichtung ohne Schwierigkeiten montiert und demontiert werden.

Eine einfache, zweckmäßige Konstruktion ergibt sich, wenn erfindungsgemäß Messerkopf und Werkzeugträger zahnartig ineinandergreifende Zentrieransätze bzw. -ausnehmungen aufweisen, die jeweils mit den einen der nebeneinanderliegenden Flanken die Paßflächen bilden, und die den Paßflächen abgewandten Flanken des Messerkopfes als Spannflächen dienen, an denen die Spannelemente angreifen. Es kommt zu einer platzsparenden Bauweise mit der Möglichkeit einer symmetrischen Anordnung von Paßflächen und Spannelementen und guten Spann- und Abstützbedingungen, so daß trotz des rationellen Messerkopfwechsels eine sichere, exakt zentrierende und hochbelastbare Messerkopfbefestigung entsteht.

Die Spannelemente können an und für sich beliebig gestaltet sein, sie müssen nur die erforderlichen Spannkräfte in tangentialer und axialer Richtung hervorrufen. So ist es möglich, für diese beiden Spannkraftrichtungen jeweils eigene Spannschrauben vorzusehen, doch ist es vorteilhaft, wenn die Spannflächen zur Messerkopfstirnfläche geneigt sind und die Spannelemente eine mit den Spannflächen zusammenwirkende Keilfläche od. dgl. bilden. Durch diese Keilwirkung werden die Spannkräfte in die erforderlichen axialen und tangentialen Komponenten zerlegt, so daß die erforderliche Messerkopfverspannung durch einfache und leicht betätigbare Spannelemente erreicht werden kann.

Bestehen die Spannelemente aus drehbaren, auf zum Messerkopf parallelachsigen, federbelasteten Spannbolzen sitzenden Spannknebeln, die als Keilfläche eine Kegelfläche mit einem an die Spannflächenneigung angepaßten Kegelwinkel aufweisen, können die Messerköpfe durch ein kurzes Verdrehen der Spannknebel festgespannt oder gelöst werden, da ein Verdrehen der entsprechend großen Spannknebel aus der Offenstellung in die Spannstellung ein Auflaufen der Kegelfläche auf die zugehörige Spannfläche verursacht, wodurch auf Grund des vorhandenen Übermaßes der Spannknebel in Achsrichtung des Spannbolzens gegen die Federbelastung angehoben wird, bis die Kegelfläche passend an der Spannfläche anliegt, und die so gespannte Spannfeder den Spannknebel an die Spannfläche drückt. Ein Rückdrehen des Spannknebels bringt die Kegelfläche außer Eingriff mit der Spannfläche und gibt diese und dadurch den Messerkopf frei. Bei geeigneter Spannknebelausbildung genügt daher eine Vierteldrehung eines jeden Spannelementes, um den Messerkopf entweder festzuspannen oder zu lösen.

Besitzt die Kegelfläche eine als Rastfläche den Spannflächen zugeordnete Abflachung, wird ein ungewolltes Lösen der Spannknebel durch Vibrationen od. dgl. verhindert, da diese Rastfläche auf der Spannfläche satt aufliegt und auf einfache Weise eine Sicherung der Verspannung ergibt.

Um eine zusätzliche Einstellmöglichkeit für die Spannelemente zu erreichen und auch Verschleißerscheinungen im Bereich der Spannflächen beseitigen zu können, sind die Spannflächen mit einem auswechselbaren Einsatzplättchen bestückt, welche Plättchen durch ihre Stärke eine Beeinflussung der Spannkraft erlauben und bei auftretendem Verschleiß ausgetauscht werden können.

In der Zeichnung ist der Erfindungsgegenstand rein schematisch in einem Ausführungsbeispiel dargestellt, und zwar zeigen

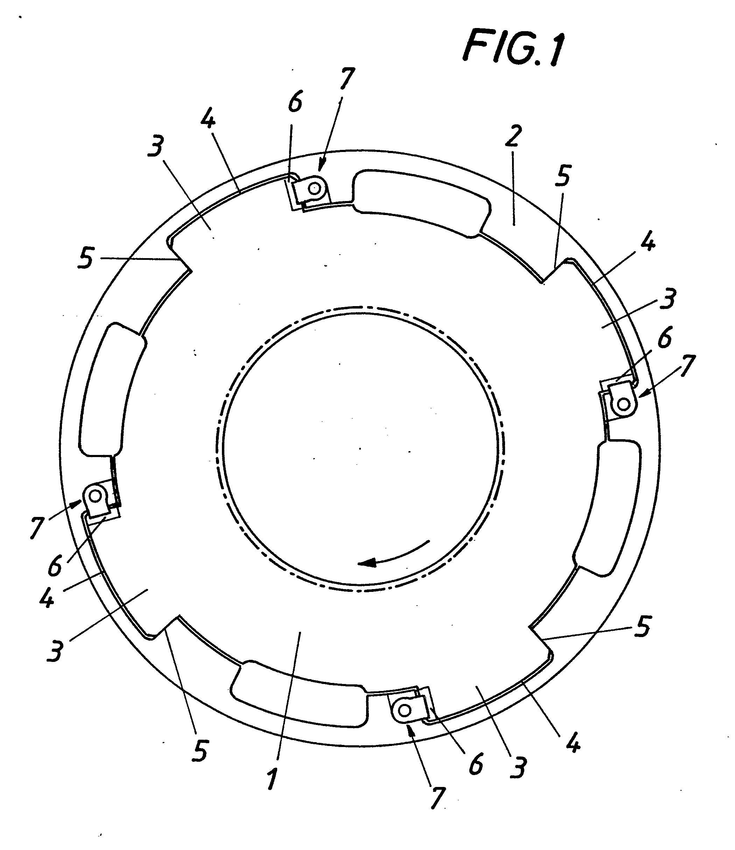

Fig. 1 einen erfindungsgemäß an einem Werkzeugträger befestigten Messerkopf in Stirnansicht,

Fig. 2 ein Detail der Messerkopfbefestigung in größerem Maßstab und

Fig. 3 einen Schnitt nach der Linie III-III der Fig. 2.

Ein scheibenförmiger, innenschneidender Messerkopf 1 sitzt stirnseitig an einem trommelförmigen, drehbaren Werkzeugträger 2, wobei der Messerkopf 1 mit vier entlang des Außenumfanges gleichmäßig verteilten Zentrieransätzen 3 zahnartig in entsprechende Zentrierausnehmungen 4 des Werkzeugträgers 2 eingreift. Die Zentrierausnehmungen 4 nehmen die Zentrieransätze 3 mit Drehbewegungsspiel auf, so daß der Messerkopf 1 schwierigkeitslos an den Messerträger 2 angesetzt und abgenommen werden kann. Zur Zentrierung bilden jeweils die in Drehrichtung treibenden Flanken radiale Paßflächen 5, die, gegenseitig zur Anlage gebracht, den Sitz des Messerkopfes 1 relativ zum Werkzeugträger 2 exakt bestimmen. Die ihnen gegenüberliegenden Flanken der Zentrieransätze 3 dienen als Spannflächen 6, an denen zur Fixierung des Messerkopfes 1 am Werkzeugträger 2 Spannelemente 7 angreifen. Die Spannflächen 6 sind zur Messerkopfstirnseite 1a geneigt und die Spannelemente 7 weisen jeweils Spannknebel 8 auf, die keilartig mit den Spannflächen 6 zusammenwirken und dementsprechend die entstehende Spannkraft in eine axiale und eine tangentiale Komponente aufteilen, so daß der Messerkopf 1 sowohl an die Ansatzfläche 2a des Werkzeugträgers 2 als auch gegen die aneinanderliegenden Paßflächen 5 gedrückt wird. Ein Anziehen der Spannelemente 7 führt daher einerseits zur Zentrierung und anderseits zur Fixierung des Messerkopfes 1 am Werkzeugträger 2.

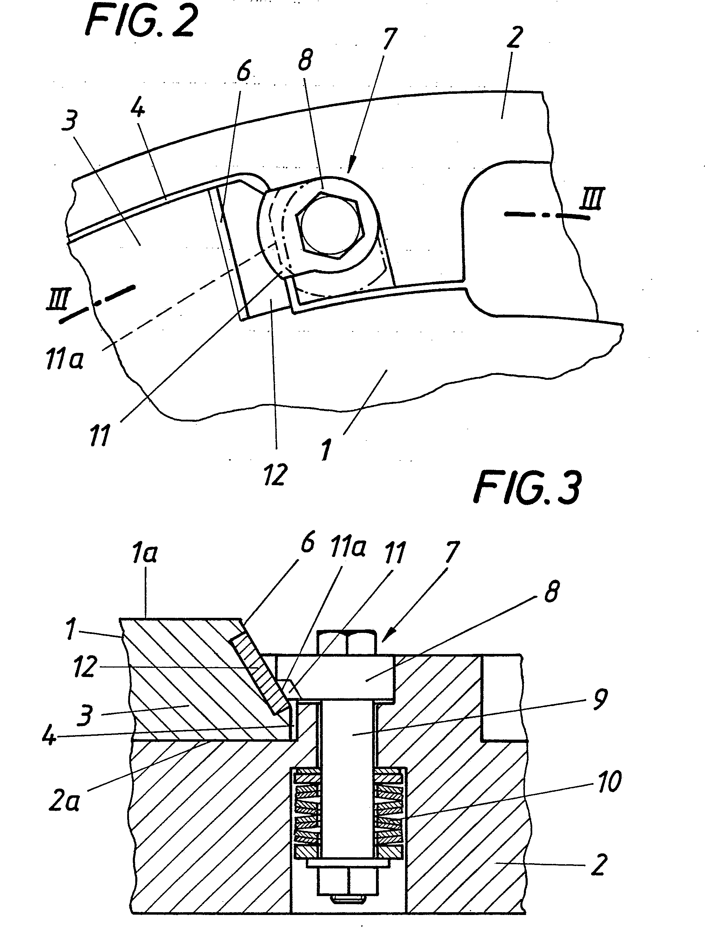

Wie vor allem aus den Fig. 2 und 3 hervorgeht, bestehen die Spannelemente 7 aus den auf einem Spannbolzen 9 sitzenden, drehbaren Spannknebeln 8, wobei der Spannbolzen 9 gegen die Kraft einer Spannfeder 10 axial beweglich im Werkzeugträger 2 gelagert ist. Die Spannknebel 8 bilden als Keilfläche eine Kegelfläche 11 mit einer Abflachung 11a, so daß beim Verdrehen des Spannknebels 8 die Kegelfläche 11 auf die Spannfläche 6 aufläuft, dabei durch das vorhandene Übermaß eine Axialbewegung des Spannbolzens 9 gegen die Kraft der Spannfeder 10 erzwingt und nach einer Vierteldrehung mit der Abflachung 11a als Rastfläche satt auf der Spannfläche 6 aufliegt. Nun drückt die vorgespannte Spannfeder 10 den Spannknebel axial gegen die Spannfläche 6 und der Messerkopf 1 wird wunschgemäß verspannt. Ein einfaches Rückdrehen um 90° ( punktierte Darstellung in Fig. 2) bringt den Spannknebel 8 und den Spannbolzen 9 in die Offenstellung zurück und gibt den Messerkopf 1 für einen Messerkopfwechsel frei.

Um die Messerkopfverspannung einstellen zu können, läßt sich die Spannfeder 10 mehr oder weniger stark vorspannen, was den Anpreßdruck der Spannknebel 8 an die Spannflächen 6 erhöht oder vermindert. Zusätzlich können aber die Spannflächen 6 auch mit auswechselbaren Einsatzplättchen 12 bestückt sein, so daß durch die Wahl der Plättchenstärke ebenfalls eine Beeinflussung der Spannkraft möglich ist. Durch diese Einsatzplättchen 12 kann darüber hinaus durch geeignete Querschnitte die Spannflächenneigung geändert werden, wodurch bei entsprechenderAnpassung der Spannknebel die Komponentenaufteilung der Spannkräfte in axialer und tagentialer Richtung variierbar bleibt.

Patentansprüche:

1. Messerkopfbefestigung für scheibenförmige,
stirnseitig an einem drehbaren Werkzeugträger (2)
ansetzbare Messerköpfe (1), mit den Messerkopf
(1) gegenüber dem Werkzeugträger (2) zentrierenden
radialen Paßflächen (5) und den zentrierten Messerkopf (1) an der Ansetzfläche (2a) des Werkzeugträgers (2) fixierenden Spannelementen (7), dadurch
gekennzeichnet, daß der Messerkopf (1) mit Drehbewegungsspiel am Werkzeugträger (2) ansetzbar ist
und die Spannelemente (7) beim Fixieren des Messerkopfes (1) axiale und tangentiale Spannkräfte
oder Spannkraftkomponenten zum Andrücken des Messerkopfes (1) sowohl an die Ansetzfläche (2a) als
auch an die Paßflächen (5) des Werkzeugträgers (2)
bewirken.

2. Messerkopfbefestigung nach Anspruch 1, dadurch gekennzeichnet, daß Messerkopf (1) und Werkzeugträger (2) zahnartig ineinandergreifende Zentrieransätze (3) bzw. -ausnehmungen (4) aufweisen,
die jeweils mit den einen der nebeneinanderliegenden
Flanken die Paßflächen (5) bilden, und daß die den
Paßflächen (5) abgewandten Flanken des Messerkopfes
(1) als Spannflächen (6) dienen, an denen die Spannelemente (7) angreifen.

3. Messerkopfbefestigung nach Anspruch 2, dadurch
gekennzeichnet, daß die Spannflächen (6) zur Messerkopfstirnfläche (1a) geneigt sind und die Spannelemente (7) eine mit den Spannflächen (6) zusammenwirkende Keilfläche (11) bilden.

4. Messerkopfbefestigung nach Anspruch 3, dadurch gekennzeichnet, daß die Spannelemente (7) aus drehbaren, auf zum Messerkopf (1) parallelachsigen, federbelasteten Spannbolzen (9) sitzenden Spannknebeln (8) bestehen, die eine als Keilfläche dienende Kegelfläche (11) mit einem an die Spannflächenneigung angepaßten Kegelwinkel aufweisen.

5. Messerkopfbefestigung nach Anspruch 4, dadurch gekennzeichnet, daß die Kegelfläche (11) eine als Rastfläche den Spannflächen (6) zugeordnete Abflachung (11a) besitzt.

6. Messerkopfbefestigung nach einem der Ansprüche 4 oder 5, dadurch gekennzeichnet, daß die Spannflächen (6) mit einem auswechselbaren Einsatzplättchen (12) bestückt sind.

0193698

# FIG.1

0193698

**FIG.2**

**FIG.3**

**Europäisches Patentamt**

# EUROPÄISCHER RECHERCHENBERICHT

0193698
Nummer der Anmeldung

EP 85 89 0056

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | US-A-2 228 005 (GILES) | 1 | B 23 Q 3/12 |
| A | US-A-3 700 292 (OWENS) | 1,3 | |
| A | DE-A-2 629 781 (VEREINIGTE BAUBESCHLAGFABRIKEN GRETSCH) | | |
| A | DE-A-1 575 205 (MEINERDING) | | |
| A | US-A-1 327 011 (ARNDT) | 4 | |
| A | US-A-1 691 649 (DRAKE) | | |

--- - ---

**RECHERCHIERTE SACHGEBIETE (Int. Cl.4)**

B 23 Q 3/00
B 23 C 5/00
B 23 Q 1/00
F 16 D 1/00
F 16 B 2/00

Der vorliegende Recherchenbericht wurde für alle Patentansprüche erstellt.

| Recherchenort DEN HAAG | Abschlußdatum der Recherche 23-10-1985 | Prüfer BOGAERT F.L. |
|---|---|---|